# EUROPÄISCHE PATENTSCHRIFT

(11) **EP 2 714 229 B1**
(45) Veröffentlichungstag und Bekanntmachung des Hinweises auf die Patenterteilung: **06.01.2016**
(21) Anmeldenummer: 12733431.6
(22) Anmeldetag: 01.06.2012
(51) Int. Cl.: B01D 33/01, B29C 47/00, B29C 47/68

(54) **FILTRIERVORRICHTUNG FÜR HOCHVISKOSE FLUIDE**
FILTERING DEVICE FOR HIGHLY VISCOUS FLUIDS
DISPOSITIF DE FILTRATION POUR FLUIDES TRÈS VISQUEUX

(30) Priorität: 01.06.2011 DE 102011050805
(43) Veröffentlichungstag der Anmeldung: 09.04.2014
(73) Patentinhaber: Nordson Holdings S.à r.l. & Co. KG, 40699 Erkrath (DE)
(72) Erfinder: HARTMANN, Frank, 48565 Steinfurt (DE); MIDDLER, Robert, 48329 Havixbeck (DE)
(74) Vertreter: Eisenführ Speiser
(86) Internationale Anmeldenummer: PCT/EP2012/060423
(87) Internationale Veröffentlichungsnummer: WO 2012/164079

(56) Entgegenhaltungen:
- EP-A1- 0 672 443
- EP-A2- 0 919 353
- WO-A2-02/16113

## Beschreibung

Die Erfindung betrifft eine Filtriervorrichtung für hochviskose Fluide mit wenigstens zwei parallelen Siebbolzen, die in Siebbolzenbohrungen eines Gehäuses verschiebbar angeordnet sind und die jeweils wenigstens eine Siebkavität aufweisen, in der wenigstens ein Filterelement angeordnet ist, wobei das Gehäuse eine Zulauföffnung aufweist, von der aus auf der Schmutzseite wenigstens ein Fließkanal zu jeder Siebbolzenbohrung führt, sowie wenigstens ein Fließkanal, der auf der Reinseite von jeder Siebbolzenbohrung zu einer Auslauföffnung führt.

Derartige Filtriervorrichtungen sind beispielsweise aus der DE 102 54 022 A1 oder der DE 103 17 170 A1 bekannt. Sie besitzen insbesondere entweder zwei Siebbolzen mit jeweils einer Siebstelle oder einen Siebbölzen mit zwei Siebstellen. Hierdurch wird es ermöglicht, eine der Siebstellen im Produktionsbetrieb zu halten, während die andere gereinigt wird. Eine solche Filtriervorrichtung erlaubt daher einen kontinuierlichen Betrieb einer Anlage, in der ein hochviskoses Medium, insbesondere eine Kunststoffschmelze, gereinigt werden muss.

Der Zulauf des Fluids erfolgt meist an einer Zulauföffnung in einer Seitenfläche des Gehäuses. Um von dort die Siebstellen in beiden Siebbolzen speisen zu können, gabelt sich die Zulaufleitung in Teilkanäle auf, welche jeweils zu den Siebstellen führen. Da Umlenkungen der Teilkanäle um kleine Winkel von weniger als etwa 110° vermieden werden sollen, um den Fließwiderstand gering zu halten, wird eine gewisse Gehäusebreite benötigt, um die Teilkanäle innerhalb des Gehäuses zu den Siebbolzen führen zu können. Auf der Reinseite der Siebstellen sind die Fließwege gleichartig ausgebildet. Hier führen Teilkanäle von den Siebstellen weg und vereinigen sich wieder hin zu einer Auslauföffnung hin. Auch auf dieser Seite wird also wieder im Gehäuse Raum seitlich von den Siebbolzenbohrungen benötigt.

Das Gehäusevolumen seitlich neben den meist übereinander angeordneten Siebbolzen ist jedoch bis auf den Bereich der relativ schmalen Fließwege ungenutzt. Das ungenutzte Volumen vergrößert die Masse der Filtriervorrichtung und führt damit auch zu hohen Werkstoffkosten. Weiterhin wird viel Aufstellfläche für die Filtriervorrichtung benötigt, und zwar nicht nur durch die Breite des Gehäuses selbst, sondern auch durch die sich seitlich noch anschließenden Rohrleitungen und Verschraubungen.

Schließlich ist das bekannte Konzept eines Gehäuses für eine Filtriervorrichtung nicht geeignet, um mehrere Siebkavitäten anzuströmen, die paarweise gegenüberliegend an einem Siebbolzen angeordnet sind.

Aufgabe der Erfindung ist es somit, eine Filtriervorrichtung der eingangs genannten Art dergestalt zu verbessern, dass schmalere Gehäuse ausgebildet werden können, dass weniger Aufstellfläche für die Filtriervorrichtung benötigt wird und/oder dass an einem Siebbolzen die Siebkavitäten nicht nur axial versetzt nebeneinander, sondern auch diametral gegenüberliegend am Siebbolzen vorgesehen werden können.

Gelöst wird diese Aufgabe durch eine Filtriervorrichtung mit den Merkmalen des Anspruchs 1.

Der Zulaufkanal und/oder der Ablaufkanal führen nach der Erfindung parallel zu einer imaginären Verbindungslinie der beiden Mittelpunkte der Siebbolzenbohrungen durch das Gehäuse so auf die Siebbolzenbohrungen zu, dass sie diese seitlich anschneidet oder randseitig durchläuft.

"Tangential" im Sinne der vorliegenden Erfindung bedeutet als nicht zwangsläufig eine Ein-Punkt-Berührung einer Kreislinie wie im streng geometrischen Sinne, sondern schließt auch Durchdringungen nach Art einer Sekante ein oder Mischformen, bei denen ein Teil des Hohlraums des Fließkanals an der Siebkavität vorbei läuft und ein weiterer Teil in Überschneidung mit der Siebkavität ist. Wesentlich ist nur, dass der Kanal an der Siebkavität des einen Siebbolzens vorbei läuft und dann direkt weiter bis zu der Siebkavität des anderen Siebbolzens läuft.

Der tangentiale Anschnitt der Siebkavitäten durch den Zulaufkanal auf der Schmutzseite oder durch den Ablaufkanal auf der Reinseite oder durch beide zugleich reduziert die erforderliche Breite des Gehäuses praktisch auf den Durchmesser der Siebbolzenbohrungen zuzüglich eines bestimmten Maßes für eine ausreichende Wandstärke an beiden Seiten. Erfindungsgemäß kann die Gehäusebreite somit wesentlich reduziert werden.

Dadurch, dass nur noch ein geradliniger Zulaufkanal und/oder Ablaufkanal für alle Siebbolzen zusammen verwendet wird, kann auf die Verzweigungs- bzw. Vereinigungsstellen verzichtet werden. Strömungsmechanische Hindernisse werden dadurch vermieden. Fertigungstechnisch gesehen ist das Herstellen einer einzelnen geraden Bohrung wesentlich einfacher als die Herstellung von zwei gegabelten Teilkanälen.

Die bevorzugte Ausführungsform sieht vor, dass die Siebbolzen übereinander im Gehäuse angeordnet sind und die Fließkanäle vertikal angeordnet sind. Dies schließt um 90° gedrehte Einbaulagen nicht aus.

Eine einfache Ausführungsform einer erfindungsgemäßen Filtriervorrichtung sieht vor, dass die Zulauföffnung und die Auslauföffnung an einer Gehäuseober- und -unterseite angeordnet sind. Die Zulaufkanäle oder Auslaufkanäle münden entweder alle an einer oberen oder unteren Deckfläche, oder die Zulaufkanäle führen zu der einen Fläche und die Auslaufkanäle zu der anderen.

Wenn mehrere Siebkavitäten in Längsrichtung versetzt zueinander am Siebbolzen angeordnet sind, werden mehrere Fließkanäle nebeneinander ausgebildet. Es kann dann eine einfach herzustellende Adapterplatte auf das Grundgehäuse aufgesetzt werden, um die Verzweigung von der Zulauföffnung bzw. der Auslauföffnung auf die mehreren Fließkanäle bereit zu stellen.

Eine weitere Ausführungsform sieht vor, dass die Zulauföffnung und/oder die Auslauföffnung an Seitenflächen des Gehäuses angeordnet sind und ein horizontaler Zusatzkanal von der Zulauföffnung und/oder von der Auslauföffnung zu den vertikalen Fließkanälen führt. Dies kann vorteilhaft sein, wenn die Zulauföffnung und/oder die Auslauföffnung an Seitenflächen angeordnet sein sollen, um eine erfindungsgemäße Filtriervorrichtung in eine bestehende Anlage einzubinden, welche eine horizontale Leitungsführung und seitlichen Leitungsanschluss vorsieht.

Die Erfindung wird nachfolgend anhand von Ausführungsbeispielen und mit Bezug auf die Zeichnung näher erläutert. Die Figuren zeigen im Einzelnen:
- Fig. 1: eine Filtriervorrichtung gemäß einer ersten Ausführungsform in perspektivischer Ansicht;
- Fig. 2: die Filtriervorrichtung nach Figur 1 im Schnitt;
- Fig. 3a: eine zweite Ausführungsform einer Filtriervorrichtung im Schnitt;
- Fig. 3b: ein Ausschnitt der zweiten Ausführungsform in seitlicher Ansicht;
- Fig. 4a: eine dritte Ausführungsform im Schnitt;
- Fig. 4b: ein Ausschnitt der dritten Ausführungsform in Ansicht von oben;
- Fig. 5: ein Gehäuse für eine Filtriervorrichtung gemäß einer vierten Ausführungsform in perspektivischer Ansicht;
- Fig. 6a: ein Gehäuse für eine Filtriervorrichtung gemäß einer fünften Ausführungsform in perspektivischer Ansicht und
- Fig. 6b: die Filtriervorrichtung gemäß der fünften Ausführungsform im Querschnitt.

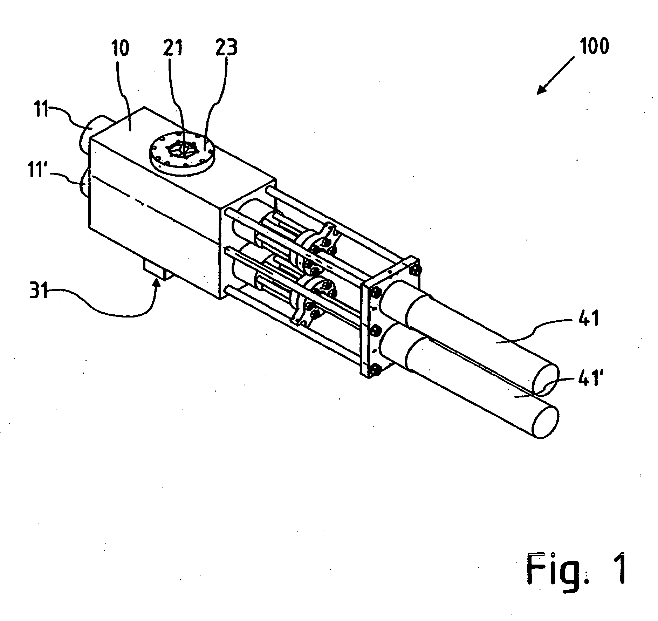

Fig. 1 zeigt eine erfindungsgemäße Filtriervorrichtung 100 gemäß einer ersten Ausführungsform , die ein Gehäuse 10 umfasst, in welchem zwei Siebbolzen 11, 11' gelagert sind. Durch Hydraulikantriebe 41, 41' sind die Siebbolzen 11, 11' gegenüber dem Gehäuse 10 längsverschiebbar. Die dargestellte Ausführungsform der Filtriervorrichtung 100 besitzt an der Oberseite des Gehäuses 10 eine Zulauföffnung 21, die in eine Adapterplatte 23 eingebracht ist. An der Unterseite des Gehäuses 10 ist eine Auslauföffnung 31 vorgesehen.

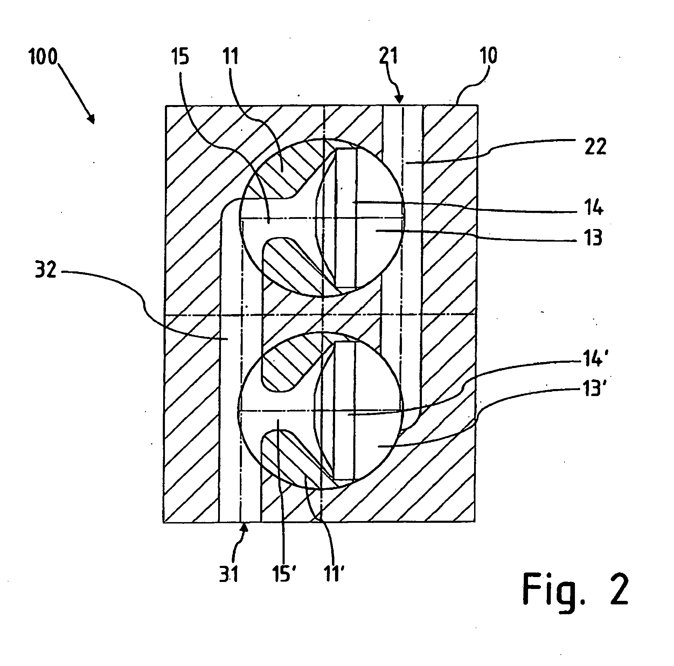

Fig. 2 zeigt das Gehäuse 10 mit den Siebbolzen 11, 11' im Querschnitt. Die Adapterelemente, die an der Oberseite und Unterseite des Gehäuses anzubringen sind, sind hier nicht dargestellt.

Von der Zulauföffnung 21 an der Oberseite des Gehäuses 10 erstreckt sich ein vertikaler Fließkanal 22 nach unten, durch welchen die Siebkavitäten 13, 13' der beiden Siebbolzen 11, 11' jeweils tangential angeschnitten werden, so dass das Fluid, das über den Zulaufkanal 22 eingeleitet wird, in die Siebkavitäten 13, 13' gelangt und dort durch die Filterelemente 14, 14' hindurch zur anderen Seite der jeweiligen Siebbolzen 11, 11' strömt.

An der Auslaufseite, der sogenannten Reinseite, ist wiederum ein Fließkanal 32 vorgesehen, der die rückwärtigen Auslauföffnungen 15, 15' der beiden Siebbolzen 11, 11' tangential anschneidet. Mit nur zwei einheitlichen Fließkanälen 22, 32 können also die beiden Siebkavitäten 13, 13' der übereinander liegenden Siebbolzen 11, 11' erreicht werden.

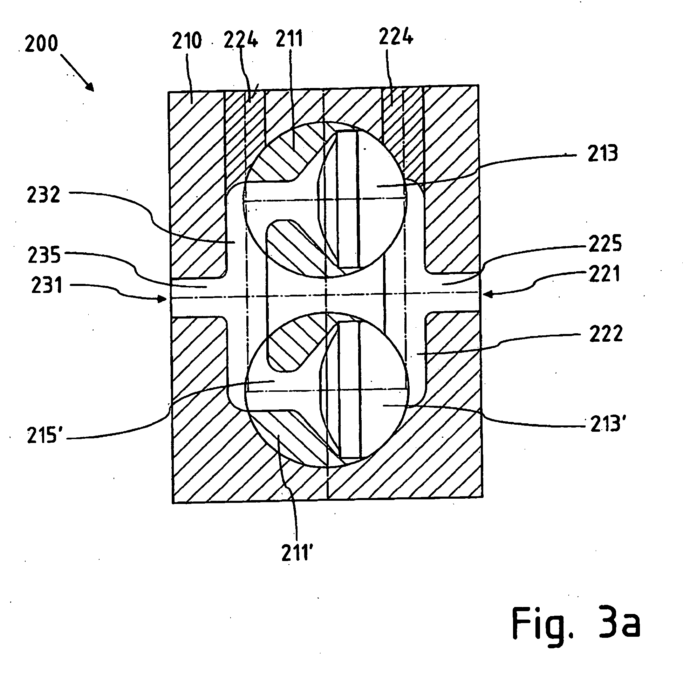

Fig. 3a zeigt eine abgewandelte Ausführungsform einer Filtriervorrichtung 200, wiederum mit einem Gehäuse 210 mit rechteckigen Querschnitt und mit zwei längs verschieblich darin gelagerten Siebbolzen 211, 211'. Bei dieser Ausführungsform verbleiben sowohl eine Zulauföffnung 221 wie auch eine Auslauföffnung 231 an Seitenflächen des Gehäuses 210, wie im Stand der Technik grundsätzlich bekannt. Durch die erfindungsgemäß vorgesehenen, die Siebkavitäten 213, 213' und deren Austrittskanäle 215, 215' tangential schneidenden Fließkanäle 222, 232 wird jedoch die Fertigung der Fließkanäle 222, 232 gegenüber dem Stand der Technik deutlich erleichtert. Es müssen nämlich zu deren Herstellung nur senkrechte Bohrungen von der Gehäuseoberseite eingebracht werden und zwar in der Weise, dass die Siebkavitäten 213, 213' auf der Schmutzseite und die Auslauföffnung 215, 215' auf der anderen Seite der Siebbolzen 211, 211' angeschnitten werden. Der zur Gehäuseoberseite hin führende Abschnitt der Fließkanäle 222, 232 wird durch geeignete Stopfen 224 anschließend wieder verschlossen.

Kurze horizontale Stichkanäle 225, 235 führen von der Zulauföffnung 221 bzw. von der Auslauföffnung 231 zu den vertikalen Fließkanälen 222, 232, so dass sich auf der Rein- wie auch auf der Schmutzseite jeweils ein T-förmiger Fließweg ausbildet, durch welchen die Verteilung des Fluidstroms auf die beiden Siebbolzen bewirkt wird.

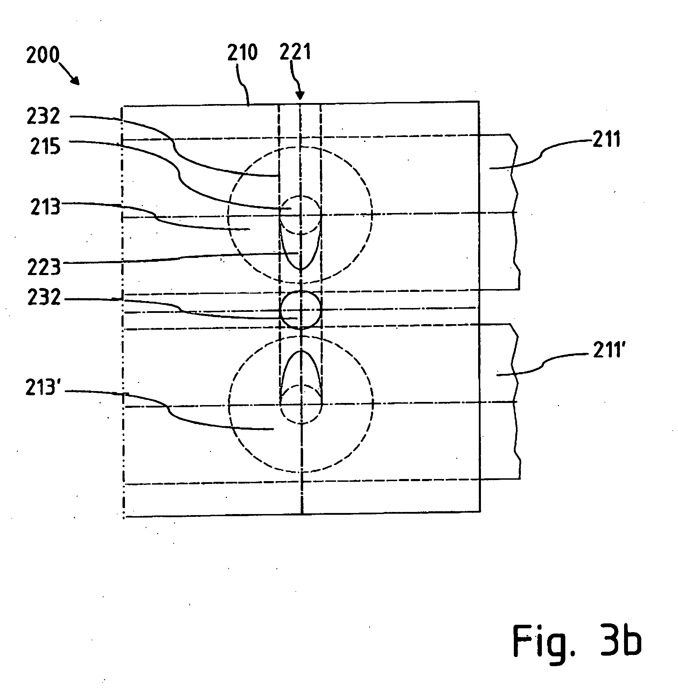

Figur 3b zeigt einen Blick auf die Filtriervorrichtung 200 von der Seite her auf die Auslauföffnung 232. Zonen 223 kennzeichnen diejenigen Bereiche, in denen sich die Hohlräume von Fließkanal 232 und Austrittskanal 215 am Siebbolzen 211 durchdringen.

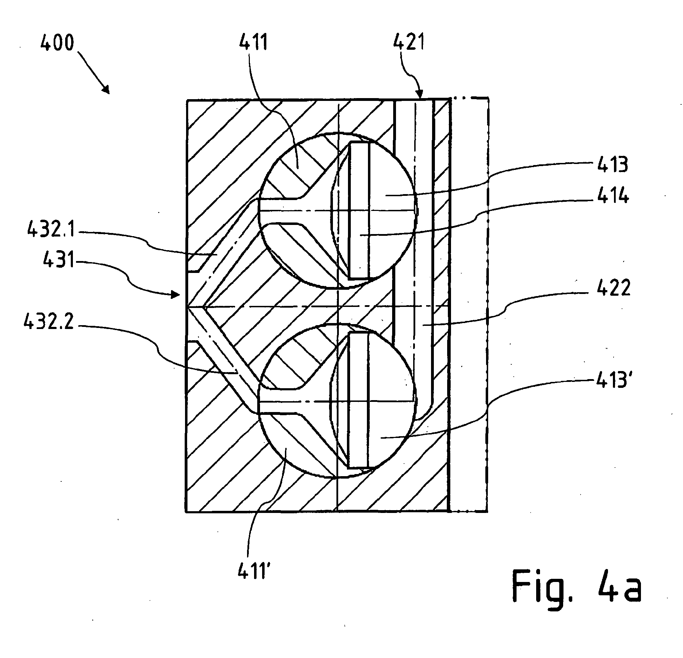

Fig. 4a zeigt eine weitere Ausführungsform einer Filtriervorrichtung 400 mit einem Gehäuse 410, in dem zwei zylindrische Siebbolzen 411, 411'verschiebbar gelagert sind. Wie die Querschnittsansicht in Fig. 4a zeigt, sind bei dieser Ausführungsform sowohl ein erfindungsgemäß ausgebildeter Fließkanal 422 vorgesehen, nämlich rechts auf der Schmutzseite, sowie eine nach dem Stand der Technik ausgebildete Verzweigung in Teilkanäle 432.1, 432.2 auf der Reinseite, welche sich zur Auslauföffnung 431 hin wieder vereinigen.

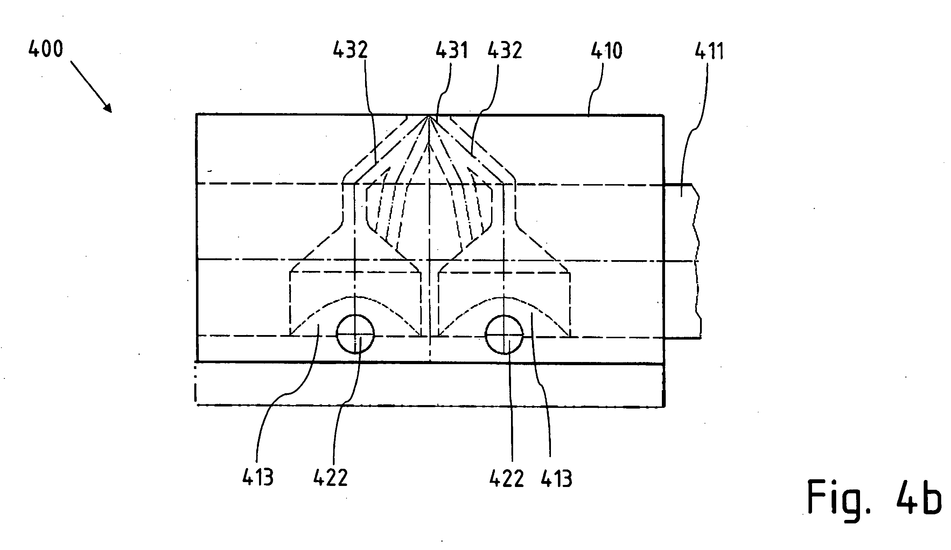

Fig. 4b zeigt die Filtriervorrichtung 400 von oben. Zwei Siebkavitäten 413 liegen in dem Siebbolzen 411 axial versetzt nebeneinander. Entsprechend sind auch zwei versetzt zueinander angeordnete Fließkanäle 422 auf der Schmutzseite vorgesehen. Auf der Reinseite hingegen besteht, ausgehend von der Zulauföffnung 431, die an sich bekannte Verzweigung in insgesamt vier Teilkanäle 423, die zu je zwei Siebkavitäten 413 in den beiden übereinander liegenden Siebbolzen führen.

Die Fig. 4a und 4b zeigen zudem deutlich, dass auf der Reinseite eine größere Gehäusebreite benötigt wird, um die Teilkanäle 432, die nach herkömmlicher Bauart verzweigt sind, im Gehäuse 410 anzuordnen, als auf der Schmutzseite rechts in Fig. 4a bzw. unten in Fig. 4b. Die strichpunktierte Linien in Fig. 4a rechts bzw. in Fig. 4b unten kennzeichnen jeweils den Verlauf der imaginären Umrisse eines Gehäuses, das in herkömmlicher Bauart mit internen Verzweigungen auf beiden Seiten ausgebildet wäre. Die Volllinie, an der die Schraffur endet, zeigt die nach der Erfindung tatsächlich benötigte Gehäusebreite.

Bereits bei den vorstehend beschriebenen, relativ einfachen Ausführungsformen ergeben sich die erfindungsgemäßen Vorteile bei der Fertigung und es wird eine insgesamt deutlich schmalere Ausführung des Gehäuses ermöglich als sonst im Stand der Technik üblich.

Besonders geeignet ist die erfindungsgemäße Führung der Fließkanäle für komplexe Anwendungen bei Filtriervorrichtungen für hochviskose Medien zur Vergrößerung der Filterfläche. Die erfindungsgemäße Fließkanalführung ermöglicht überhaupt erst, mit einem vertretbaren Aufwand bei der Fertigung nicht nur zwei Siebstellen je Siebbolzen vorzusehen, sondern wenigstens zwei Paare von Siebkavitäten an jedem Siebbolzen auszubilden, wobei die Siebstellen jedes Paares an diametral gegenüber liegenden Seiten des Siebbolzens angeordnet sind. Somit kann die wirksame Filterfläche bei einer erfindungsgemäßen Filtriervorrichtung auf einen Schlag verdoppelt werden.

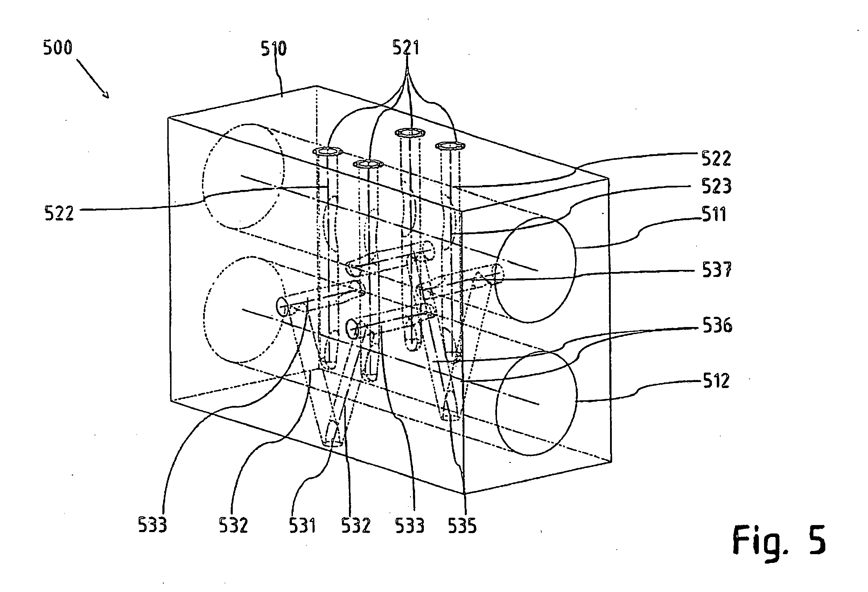

Fig. 5 zeigt eine Filtriervorrichtung 500, die der Übersichtlichkeit halber hier nicht vollständig, nämlich ohne Siebbolzen, dargestellt ist. Es ist nur das Gehäuse 510 mit seinen Fließkanälen abgebildet. Das Gehäuse 510 weist zwei parallele Siebbolzenbohrungen 511, 512 übereinander auf. An der Oberseite des Gehäuses 510 sind insgesamt vier Zulauföffnungen 521 angeordnet, die durch eine hier nicht dargestellte, mit der Adapterplatte 23 in Fig. 1 vergleichbare Adapterplatte überdeckt werden können, um die einzelnen Fließwege zu einer gemeinsamen Zulauföffnung zu führen.

Von den Zulauföffnungen 521 aus erstrecken sich vier Fließkanäle 522 vertikal nach unten, so dass sie mit einem Teil ihres Hohlraums durch die Öffnungen in der Siebstelle laufen und mit einem Teil daran vorbei. Die Nummern 523 kennzeichnen diejenigen Volumenbereiche, die die Fließkanäle 522 mit den jeweiligen Siebkavitäten des Siebbolzens gemeinsam haben, wo sich also die imaginären Hohlkörper der Fließwege durchdringen.

Auf der Auslaufseite werden die Siebstellen ebenfalls tangential angeschnitten, nämlich durch horizontal verlaufende erste Fließkanäle 533, 537. Diese können in einfacher Weise durch Bohrungen hergestellt werden, die von einer Seitenfläche des Gehäuses 510 eingebracht sind und die an ihrem Ende mittels eines Stopfens wieder verschlossen sind.

Bei der in Fig. 5 gezeigten Ausführungsform werden die horizontalen ersten Fließkanäle 533, 537 paarweise zu einer Auslauföffnung 531, 535 hin vereinigt. Diejenigen ersten Fließkanäle 537, die mit den Siebstellen eines Siebbolzens, der in der oberen Bohrung 511 geführt ist, in Verbindung stehen, werden durch die V-förmig zueinander angestellten zweiten Fließkanäle 536 hin zu einer gemeinsamen Auslauföffnung 535 vereinigt. Für einen in der unteren Siebbolzenbohrung 512 geführten Siebbolzen laufen die ersten Fließkanäle 533 auf die Oberseite des Siebbolzens zu. Auch sie werden durch V-förmig zueinander angestellte zweite Fließkanäle 532 zu einer gemeinsamen Auslauföffnung hin 531 vereinigt.

Um die beiden Auslauföffnungen 531, 535 an der Unterseite des Gehäuses 510 nochmals zu vereinigen, kann wiederum ein Adapterelement aufgesetzt werden, um so eine einheitliche Auslauföffnung zum vereinfachten Anschluss an nachfolgende Rohrleitungen zu schaffen.

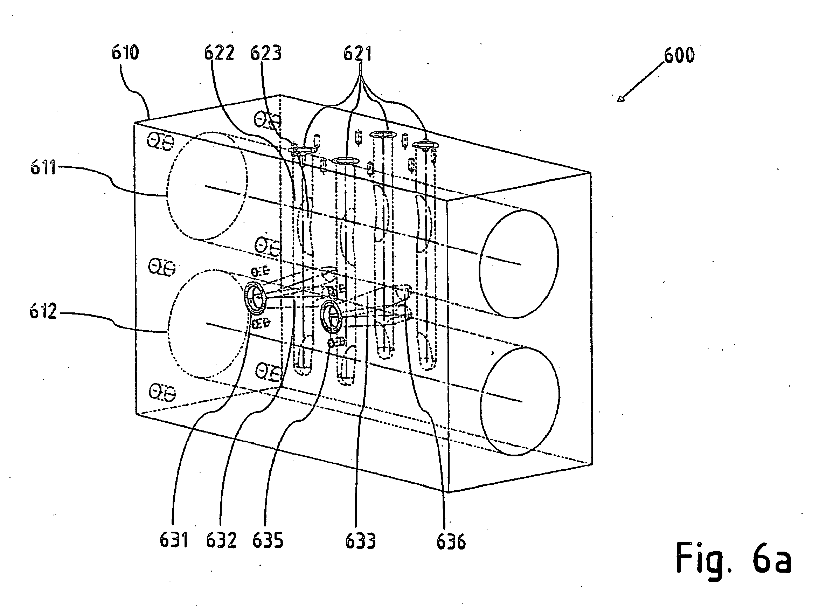

Fig. 6a zeigt ein Gehäuse 610 einer Filtriervorrichtung 600, das hinsichtlich seiner Siebbolzenbohrungen 611, 612 gleichartig zu dem Gehäuse 510 in Fig. 5 aufgebaut ist. Auch die vertikalen Fließkanäle 622, die von vier Zulauföffnungen 621 an der Oberseite des Gehäuses 610 ins Innere führen und dort die Siebbolzenbohrungen 611, 612 anschneiden, sind in gleicher Weise ausgebildet.

Unterschiedlich ist die Kanalführung auf der Auslaufseite. In Fig. 6a sind zwei Auslauföffnungen 631, 635 in einer der Seitenflächen vorgesehen. Diese können wiederum wahlweise mit einem Adapterelement vereinigt werden, so dass ein direkter Rohranschluss an der Seitenfläche möglich ist. Möglich ist weiterhin, durch eine seitlich vorgesetzte Adapterplatte eine Umlenkung des Fluidstroms zur Gehäuseunterseite hin zu bewirken.

Die Verbindung der beiden Auslauföffnungen 631,635 mit den Siebstellen erfolgt bei dieser Ausführungsform über Fließkanäle 632, 636, die jeweils paarweise angeordnet sind und die wiederum V-förmig zueinander angestellt sind. Sie laufen jeweils in einem spitzen Winkel auf eine Stelle an der Unterseite der oberen Siebbolzenbohrung 611 bzw. an der Oberseite der unteren Siebbolzenbohrung 612 zu.

Die Ausführungsform nach Fig. 6a benötigt also lediglich acht geradlinig gebohrte Fließkanäle 622, 632, 636, um das Fluid zu allen acht Siebstellen in den beiden Siebbolzen hinzuführen und von dort wieder abfließen zu lassen

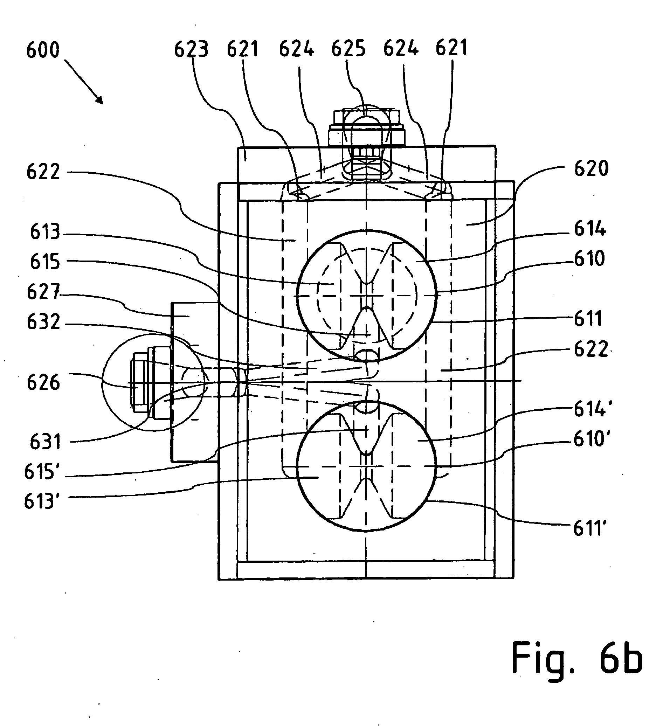

Figur 6b zeigt einen Querschnitt durch die vollständige Filtriervorrichtung 600, von der Fig. 6a das Gehäuse 610 zeigt. In dieser Darstellung ist ein Adapterelement 623 oben auf das Gehäuse 610 aufgesetzt. Es besitzt eine zentrale Zulauföffnung 625, von der aus Teilkanäle 624 hin zu den vier Zulauföffnungen 621 an der Gehäuseoberseite verzweigen. Weiterhin besitzt die Filtriervorrichtung ein Adapterelement 627 an der linken Seite, durch welches die Ströme aus den beiden Auslauföffnungen 631, 625 zu einer gemeinsamen Auslauföffnung 626 hin vereinigt werden.

Um von den paarweise angeordneten Siebkavitäten 613, 614 bzw. 613', 614' eine Verbindung zu den auslaufseitigen Fließkanälen 632 im Gehäuse 610 zu schaffen, sind in den Siebbolzen 611, 611' jeweils Austrittskanäle 615, 615' vorgesehen, die beim oberen Siebbolzen 611 in der Mitte zwischen den beiden Siebkavitäten 613, 614 beginnen und dann nach unten zum Umfang des Siebbolzens 611 führen, wo eine Überschneidung mit den Fließkanälen 625 besteht. Für diese Siebkavitäten 613', 614' des unteren Siebbolzens 611' führt ein entsprechender Austrittskanal 615' nach oben.

## Patentansprüche

1. Filtriervorrichtung (100; 200; 400; 500; 600) für hochviskose Fluide mit wenigstens zwei parallelen Siebbolzen (11, 11'; 211, 211'; 411, 411'; 611, 611'), die in Siebbolzenbohrungen (511, 512; 611, 612) eines Gehäuses (10, 210, 410, 510, 610) verschiebbar angeordnet sind und die jeweils wenigstens eine Siebkavität (13; 13'; 213, 213'; 413, 413'; 613, 614, 613', 614') aufweisen, in der wenigstens ein Filterelement (14, 14'; 414) angeordnet ist,
wobei das Gehäuse (10, 210, 410, 510, 610) eine Zulauföffnung (21; 221; 421; 521; 621) aufweist, von der aus auf der Schmutzseite wenigstens ein Fließkanal (22; 222; 422; 522; 622) zu jeder Siebbolzenbohrung (511, 512; 611, 612) führt, sowie wenigstens ein Fließkanal (32; 232; 533, 537; 632, 636), der auf der Reinseite von jeder Siebbolzenbohrung (511, 512; 611, 612) zu einer Auslauföffnung (31; 231; 431; 531; 535; 631, 635) führt,
**dadurch gekennzeichnet, dass** auf der Schmutzseite und/oder auf der Reinseite jeweils ein gemeinsamer Fließkanal (22, 32; 222, 232; 422; 522, 622, geradlinig an beiden Siebbolzenbohrungen (511, 512; 611, 612) entlang geführt ist, der in einer Produktionsstellung die Siebkavitäten (13; 13'; 213, 213'; 413, 413'; 613, 614, 613', 614') tangential schneidet.

2. Filtriervorrichtung (100; 200; 400; 500; 600) nach Anspruch 1, **dadurch gekennzeichnet, dass** die Siebbolzen (11, 11'; 211, 211'; 411, 411'; 611, 611') übereinander im Gehäuse (10, 210, 410, 510, 610) angeordnet sind und die Fließkanäle (22, 32; 222, 232; 422; 522, 622, vertikal angeordnet sind.

3. Filtriervorrichtung (100; 500) nach Anspruch 1 oder 2, **dadurch gekennzeichnet, dass** die Zulauföffnung und die Auslauföffnung an einer Gehäuseoberseite und Gehäuseunterseite angeordnet sind.

4. Filtriervorrichtung (100; 200; 400; 500; 600) nach Anspruch 3, **dadurch gekennzeichnet, dass** die Zulauföffnung (21; 221; 421; 521; 621) und die Auslauföffnung an Seitenflächen des Gehäuses (10, 210, 410, 510, 610) angeordnet sind und ein horizontaler Zusatzkanal von der Zulauföffnung und der Auslauföffnung zu den vertikalen Fließkanälen führt.

5. Filtriervorrichtung (500; 600) nach einem der Ansprüche 1 bis 4, **dadurch gekennzeichnet, dass** jeder Siebbolzen (611, 611') wenigstens ein Paar von Siebkavitäten (613, 614, 613', 614') aufweist, die an diametral gegenüber liegenden Seiten des Siebbolzens (611, 611') angeordnet sind.

6. Filtriervorrichtung (100; 200; 400; 500; 600) nach einem der Ansprüche 1 bis 5, **dadurch gekennzeichnet, dass** jeder Siebbolzen (11, 11'; 211, 211'; 411, 411'; 611, 611') wenigstens zwei Siebkavitäten (13; 13'; 213, 213'; 413, 413'; 613, 614, 613', 614') aufweist, die axial versetzt zueinander am Siebbolzen (11, 11'; 211, 211'; 411, 411'; 611, 611') angeordnet sind.

7. Filtriervorrichtung (500; 600) nach einem der Ansprüche 1 bis 6, **dadurch gekennzeichnet, dass** auf der Schmutzseite Fließkanäle (522; 622) geradlinig an beiden Siebbolzenbohrungen (511, 512; 611, 612) entlang geführt sind und in einer Produktionsstellung die Siebkavitäten (613, 614, 613', 614') tangential schneiden und dass auf der Reinseite je Siebkavität (613, 614, 613', 614') jeweils wenigstens ein Fließkanal (533, 537; 632, 633) vorgesehen ist, der die Siebkavitäten oder einen damit verbundenen Austrittskanal (615, 615') tangential schneidet und der im Querschnitt in einem Winkel von 90° bis 120° zu den ersten Fließkanälen (622) ausgerichtet ist.

8. Filtriervorrichtung (600) nach Anspruch 7, **dadurch gekennzeichnet, dass** die zu den übereinander liegenden Siebkavitäten führenden Fließkanäle (632, 633) paarweise V-förmig zueinander angestellt sind und sich zu einer gemeinsamen Auslauföffnung (631, 635) hin vereinigen.

9. Filtriervorrichtung (500) nach Anspruch 7, **dadurch gekennzeichnet, dass** sich die zu den nebeneinander liegenden Siebkavitäten führenden Fließkanäle (533, 537) paarweise zu unterschiedlichen Seiten des Gehäuses (510, 610) erstrecken und über V-förmig zueinander angestellte zweite Fließkanäle (532, 536) zu Auslauföffnungen (531, 535) hin vereinigt sind.

## Claims

1. Filtering device (100; 200; 400; 500; 600) for highly viscous fluids, having at least two parallel screen plungers (11, 11'; 211, 211'; 411, 411'; 611, 611'), which are arranged in a displaceable manner in screen-plunger bores (511, 512; 611, 612) in a housing (10, 210, 410, 510, 610) and which each have at least one screen cavity (13; 13'; 213, 213'; 413, 413'; 613, 614, 613', 614') in which at least one filter element (14, 14'; 414) is arranged,
wherein the housing (10, 210, 410, 510, 610) has an inflow opening (21; 221; 421; 521; 621) from which at least one flow duct (22; 222; 422; 522; 622) leads on the dirty side to each screen-plunger bore (511, 512; 611, 612), and at least one flow duct (32; 232; 533, 537; 632, 636) which leads on the clean side from each screen-plunger bore (511, 512; 611, 612) to an outflow opening (31; 231; 431; 531; 535; 631, 635),
**characterized in that** in each case one common flow duct (22, 32; 222, 232; 422; 522; 622) is routed on the dirty side and/or on the clean side in a rectilinear manner along the two screen-plunger bores (511, 512; 611, 612), said flow duct tangentially intersecting the screen cavities (13; 13'; 213, 213'; 413, 413'; 613, 614, 613', 614') in a production position.

2. Filtering device (100; 200; 400; 500; 600) according to Claim 1, **characterized in that** the screen plungers (11, 11'; 211, 211'; 411, 411'; 611, 611') are arranged one above another in the housing (10, 210, 410, 510, 610) and the flow ducts (22, 32; 222, 232; 422; 522; 622) are arranged vertically.

3. Filtering device (100; 500) according to Claim 1 or 2, **characterized in that** the inflow opening and the outflow opening are arranged on a housing top side and a housing underside.

4. Filtering device (100; 200; 400; 500; 600) according to Claim 3, **characterized in that** the inflow opening (21; 221; 421; 521; 621) and the outflow opening are arranged on side faces of the housing (10, 210, 410, 510, 610) and a horizontal auxiliary duct leads from the inflow opening and the outflow opening to the vertical flow ducts.

5. Filtering device (500; 600) according to one of Claims 1 to 4, **characterized in that** each screen plunger (611, 611') has at least one pair of screen cavities (613, 614, 613', 614') which are arranged on diametrically opposite sides of the screen plunger (611, 611').

6. Filtering device (100; 200; 400; 500; 600) according to one of Claims 1 to 5, **characterized in that** each screen plunger (11, 11'; 211, 211'; 411, 411'; 611, 611') has at least two screen cavities (13; 13'; 213, 213'; 413, 413'; 613, 614, 613', 614') which are arranged on the screen plunger (11, 11'; 211, 211'; 411, 411'; 611, 611') in an axially offset manner with respect to one another.

7. Filtering device (500; 600) according to one of Claims 1 to 6, **characterized in that** flow ducts (522; 622) are routed in a rectilinear manner on the dirty side along the two screen-plunger bores (511, 512; 611, 612) and tangentially intersect the screen cavities (613, 614, 613', 614') in a production position, and **in that** in each case at least one flow duct (533, 537; 632, 633) is provided per screen cavity (613, 614, 613', 614') on the clean side, said flow duct tangentially intersecting the screen cavities or an outlet duct (615, 615') connected thereto and which is oriented in cross section at an angle of 90° to 120° to the first flow ducts (622).

8. Filtering device (600) according to Claim 7, **characterized in that** the flow ducts (632, 633) that lead to the screen cavities located one above another are positioned in pairs in a V-shaped manner with respect to one another and unite in the direction of a common outflow opening (631, 635).

9. Filtering device (500) according to Claim 7, **characterized in that** the flow ducts (533, 537) that lead to screen cavities located alongside one another extend in pairs on different sides of the housing (510, 610) and are united in the direction of outflow openings (531, 535) via second flow ducts (532, 536) that are positioned in a V-shaped manner with respect to one another.

## Revendications

1. Dispositif de filtration (100; 200; 400; 500; 600) pour fluides très visqueux avec au moins deux tamis-broches parallèles (11, 11'; 211, 211'; 411, 411'; 611, 611'), qui sont agencés de façon coulissante dans des alésages de tamis-broches (511, 512; 611, 612) d'un boîtier (10, 210, 410, 510, 610) et qui présentent respectivement au moins une cavité de tamis (13; 13'; 213, 213'; 413, 413'; 613, 614, 613', 614'), dans laquelle au moins un élément de filtre (14, 14'; 414) est agencé,
dans lequel le boîtier (10, 210, 410, 510, 610) présente une ouverture d'arrivée (21; 221; 421; 521; 621), à partir de laquelle au moins un canal d'écoulement (22; 222; 422; 522; 622) conduit sur le côté encrassé à chaque alésage de tamis-broche (511, 512; 611, 612), ainsi qu'au moins un canal d'écoulement (32; 232; 533, 537; 632, 636), qui conduit sur le côté propre de chaque alésage de tamis-broche (511, 512; 611, 612) à une ouverture de sortie (31; 231; 431; 531; 535; 631, 635),
**caractérisé en ce que**, sur le côté encrassé et/ou sur le côté propre, un canal d'écoulement commun (22, 32; 222, 232; 422; 522, 622) conduit respectivement en ligne droite aux deux alésages de tamis-broche (511, 512; 611, 612), lequel coupe tangentiellement, en position de production, les cavités de tamis (13; 13'; 213, 213'; 413, 413'; 613, 614, 613', 614').

2. Dispositif de filtration (100; 200; 400; 500; 600) selon la revendication 1, **caractérisé en ce que** les tamis-broches (11, 11'; 211, 211'; 411, 411'; 611, 611') sont agencés l'un au-dessus de l'autre dans le boîtier (10, 210, 410, 510, 610) et les canaux d'écoulement (22, 32; 222, 232; 422; 522; 622) sont agencés verticalement.

3. Dispositif de filtration (100; 500) selon la revendication 1 ou 2, **caractérisé en ce que** l'ouverture d'arrivée et l'ouverture de sortie sont agencées sur un côté supérieur de boîtier et sur un côté inférieur de boîtier.

4. Dispositif de filtration (100; 200; 400; 500; 600) selon la revendication 3, **caractérisé en ce que** l'ouverture d'arrivée (21; 221; 421; 521; 621) et l'ouverture de sortie sont agencées sur des faces latérales du boîtier (10, 210, 410, 510, 610) et un canal d'appoint horizontal conduit de l'ouverture d'arrivée et de l'ouverture de sortie aux canaux d'écoulement verticaux.

5. Dispositif de filtration (500; 600) selon l'une quelconque des revendications 1 à 4, **caractérisé en ce que** chaque tamis-broche (611, 611') présente au moins une paire de cavités de tamis (613, 614, 613', 614'), qui sont agencées sur des côtés diamétralement opposés du tamis-broche (611, 611').

6. Dispositif de filtration (100; 200; 400; 500; 600) selon l'une quelconque des revendications 1 à 5, **caractérisé en ce que** chaque tamis-broche (11, 11'; 211, 211'; 411, 411'; 611, 611') présente au moins deux cavités de tamis (13; 13'; 213, 213'; 413, 413'; 613, 614, 613', 614'), qui sont agencées en décalage axial l'une par rapport à l'autre sur le tamis-broche (11, 11'; 211, 211'; 411, 411'; 611, 611').

7. Dispositif de filtration (500; 600) selon l'une quelconque des revendications 1 à 6, **caractérisé en ce que** des canaux d'écoulement (522; 622) sont guidés sur le côté encrassé en ligne droite le long des alésages de tamis-broche (511, 512; 611, 612) et coupent tangentiellement dans une position de production les cavités de tamis (613, 614, 613', 614') et **en ce qu'**il est prévu sur le côté propre pour chaque cavité de tamis (613, 614, 613', 614') respectivement au moins un canal d'écoulement (533, 537; 632, 633), qui coupe tangentiellement les cavités de tamis ou un canal de sortie (615, 615') relié à celles-ci et qui est orienté en section transversale sous un angle de 90° à 120° par rapport aux premiers canaux d'écoulement (622).

8. Dispositif de filtration (600) selon la revendication 7, **caractérisé en ce que** les canaux d'écoulement (632, 633) conduisant aux cavités de tamis disposées l'une au-dessus de l'autre sont agencés par paires en forme de V l'un par rapport à l'autre et se réunissent en une ouverture de sortie commune (631, 635).

9. Dispositif de filtration (500) selon la revendication 7, **caractérisé en ce que** les canaux d'écoulement (533, 537) conduisant aux cavités de tamis disposées l'une à côté de l'autre s'étendent par paires vers des côtés différents du boîtier (510, 610) et des deuxième canaux d'écoulement (532, 536) agencés en forme de V l'un par rapport à l'autre sont réunis dans des ouvertures de sortie (531, 535).
